Europäisches Patentamt

European Patent Office

Office européen des brevets

(19)

(11) Veröffentlichungsnummer : **0 103 069**
**B1**

(12) **EUROPÄISCHE PATENTSCHRIFT**

(45) Veröffentlichungstag der Patentschrift :
29.07.87

(21) Anmeldenummer : 83105299.8

(22) Anmeldetag : 28.05.83

(51) Int. Cl.⁴ : **H 01 M   2/38**

(54) Verfahren und Vorrichtung zum Umwälzen des Elektrolyten elektrischer Akkumulatoren mittels Blasenpumpen.

(30) Priorität : 09.09.82 DE 3233422

(43) Veröffentlichungstag der Anmeldung :
21.03.84 Patentblatt 84/12

(45) Bekanntmachung des Hinweises auf die Patenterteilung : 29.07.87 Patentblatt 87/31

(84) Benannte Vertragsstaaten :
AT DE FR SE

(56) Entgegenhaltungen :
EP-A- 0 025 312
FR-A- 2 210 236
GB-A- 1 333 082
GB-A- 1 589 275
GB-A- 2 046 004
US-A- 2 584 117
US-A- 3 083 253
US-A- 3 338 747

(73) Patentinhaber : VARTA Batterie Aktiengesellschaft
Am Leineufer 51
D-3000 Hannover 21 (DE)

(72) Erfinder : Walch, Dieter
Amselweg 7
D-6246 Glashütten 2 (DE)

(74) Vertreter : Kaiser, Dieter Ralf, Dipl.-Ing.
Gundelhardtstrasse 72
D-6233 Kelkheim/Ts. (DE)

## Beschreibung

Die Erfindung betrifft ein Verfahren zum Umwälzen des Elektrolyten elektrischer Akkumulatoren durch im Elektrolyten angeordnete Blasenpumpen sowie eine Vorrichtung zur Durchführung des Verfahrens.

Um eine gleichmäßige Elektrolytverteilung in den Akkumulatorenzellen zu erreichen und damit die Batterielebensdauer günstig zu beeinflussen, werden stationäre wie Traktions-Batterien heute zunehmend mit Elektrolytumwälzpumpen ausgestattet. Insbesondere in Bleibatterien verhindern sie die unerwünschte Säureschichtung, bei der sich mangels Konzentrationsausgleichs am Boden des Elektrolytraumes Schwefelsäure mit höherem spezifischen Gewicht ansammelt.

Bei den Elektrolytumwälzpumpen handelt es sich meist um gas- bzw. luftbetriebene Blasenpumpen, auch Mammutpumpen genannt, wie sie z. B. aus der DE-OS-29 12 527 bekannt sind. Ihr Arbeitsprinzip ist einfach ; in unten und oben offene Steigrohre, welche ganz im Elektrolyten eingetaucht sind, wird Druckluft injiziert. Infolge des niedrigeren spezifischen Gewichts des Gas/Elektrolyt-Gemisches wird dieses durch den hydrostatischen Druck der umgebenden Flüssigkeit angehoben, und die im unteren Teil der Zelle befindliche Säure höherer Dichte steigt nach. Als Folge tritt eine Zirkulation des Elektrolyten ein.

Nun kommt es im Laufe des Betriebes vor, daß einzelne Steigrohre z. B. durch Schwebeteile sich verstopfen oder daß sich unterschiedliche Strömungswiderstände von Rohr zu Rohr einstellen mit dem Ergebnis, daß die Luftverteilung über die Gesamtheit der Steigrohre in einer Zelle gestört wird und die Pumpe nicht mehr mit dem optimalen Wirkungsgrad arbeitet. Während die Förderleistung mit wachsender Zahl der Rohre bei gleichzeitig abnehmender Dicke steigt, erhöht sich andererseits gerade die Anfälligkeit des Systems gegenüber den genannten Störungen.

Der Erfindung liegt daher die Aufgabe zugrunde, eine Maßnahme anzugeben, durch welche eine ungleichmäßige Gasverteilung in den Pumpenrohren überwunden und die einwandfreie Pumpenfunktion wiedererlangt werden kann.

Die Aufgabe wird erfindungsgemäß dadurch gelöst, daß den Blasenpumpen während des Betriebes für kurze Zeit Gas mit gegenüber dem Betriebsdruck erhöhtem Druck zugeführt wird.

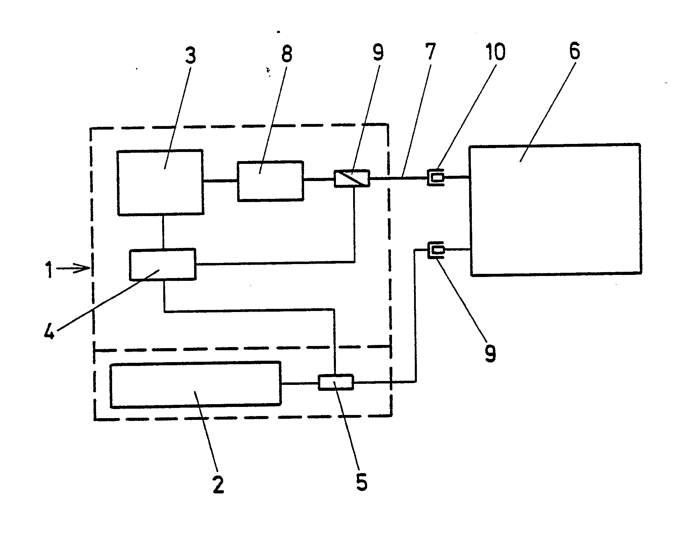

Die praktische Durchführung des Verfahrens geschieht erfindungsgemäß mit Hilfe der nachstehend beschriebenen Vorrichtung. In einer besonders vorteilhaften Ausführungsform ist diese Vorrichtung in ein elektrisches Ladegerät integriert. Die Figur zeigt den schematischen Aufbau. Danach enthält das Ladegerät 1 neben dem elektrischen Teil 2 eine Druckgasquelle 3, z. B. einen Kompressor, der über Zeitgeber 4 und Shunt 5 in Betrieb gesetzt werden kann. In der zur Batterie 6 mit ihren Elektrolytumwälzpumpen (nicht dargestellt) führenden Gaszuführungsleitung 7 sind ein Gasspeicher 8 und ein Magnetventil 9 eingebaut. Letzteres steht wie der Kompressor 3 mit dem Zeitgeber 4 in elektrischem Kontakt. Die elektrische Anschließung der Batterie 6 an das Ladegerät 1 erfolgt über den Stecker 9, die pneumatische über die Steckkupplung 10.

Der Funktionsablauf beginnt mit dem Einschalten des Zeitgebers, z. B. am Anfang der Ladung, der nun seinerseits den Kompressor — evtl. auch nur für zeitliche Intervalle — einschaltet. Das Magnetventil bleibt während des normalen Pumpenbetriebes geöffnet. Wird es durch den programmierten Zeitgeber geschlossen, staut sich die Luft im Gasspeicher solange, bis ein neuer Impuls des Zeitgebers des Magnetventil wieder öffnet. Dabei werden durch den Luftdruckstoß aus dem Speicher alle Steigrohre und Kanäle der Umwälzpumpen kurzzeitig freigeblasen. Anschließend geht der Luftdurchsatz wieder auf den normalen Betriebswert zurück, und die ursprüngliche gleichmäßige Luftverteilung in den Pumpen ist wieder hergestellt. Dieser Vorgang wiederholt sich bei jedem Pumpenintervall.

Es ist klar, den bei der richtigen Dimensionierung des Gasspeichers auf das Volumen des zwischen ihm und der Batterie liegenden Teils der Gaszuführungsleitung (Schläuche, Pumpeneingänge) Rücksicht genommen werden muß. Ist dieses Volumen erheblich, muß auch die Speicherkapazität entsprechend groß sein, damit der Luftdruckstoß noch mit hinreichender Intensität die Pumpen-Steigrohre erreicht.

Nach der aus der Figur ersichtlichen Schaltungsanordnung erfolgt die Öffnung des Magnetventils zeitgesteuert, was voraussetzt, daß zum Öffnungszeitpunkt der Gasdruck im Speicher seinen Sollwert mindestens erreicht hat. Es liegt aber auch im Rahmen der Erfindung (in der Figur nicht dargestellt), daß die Ansteuerung des Magnetventils vom Gasspeicher aus erfolgt, sobald dessen Druck den Ansprechdruck des Magnetventils überschreitet.

## Patentansprüche

1. Verfahren zum Umwälzen des Elektrolyten elektrischer Akkumulatoren durch im Elektrolyten angeordnete Blasenpumpen, dadurch gekennzeichnet, daß den Blasenpumpen während des Betriebes für kurze Zeit Gas mit gegenüber dem Betriebsdruck erhöhtem Druck zugeführt wird.

2. Vorrichtung zur Durchführung des Verfahrens nach Anspruch 1, dadurch gekennzeichnet, daß eine Druckgasquelle (3) vorhanden ist, mit welcher die Blasenpumpen des Akkumulators (6) über eine Gaszuführungsleitung (7) verbunden sind, und daß ein in der Gaszuführungsleitung (7) angeordneter Gasspeicher (8) kurzzeitig bis zu einem vorgegebenen Überdruck füllbar und durch ein Magnetventil (9) zur Seite der Blasenpumpen hin stoßartig entlastbar ist.

3. Vorrichtung nach Anspruch 2, dadurch gekennzeichnet, daß sie zusammen mit einem Zeitgeber (4) in ein elektrisches Ladegerät integriert ist.

## Claims

1. A method for circulating the electrolyte of electrical storage cells by blow pumps disposed in the electrolyte, characterised in that gas with increased pressure relative to the operating pressure is supplied to the blow pumps for a short time during operation.

2. A device for carrying out the process according to claim 1, characterised in that a pressure gas source (3) is provided, to which the blow pumps of the storage cell (6) are connected via a gas supply line (7), and that a gas (8) storage element arranged in the gas supply line (7) can be filled up to a preset overpressure and can be discharged intermittently by a magnetic valve (9) towards the side of the blow pumps.

3. A device according to claim 2, characterised in that it is integrated together with a timer (4) in an electrical charging device.

## Revendications

1. Procédé pour faire circuler l'électrolyte d'accumulateurs électriques, grâce à des pompes à bulles disposées dans l'électrolyte, procédé caractérisé en ce que du gaz à une pression plus élevée que la pression de fonctionnement, est fourni aux pompes à bulles pendant un court laps de temps au cours du fonctionnement.

2. Dispositif pour la mise en œuvre du procédé selon la revendication 1, dispositif caractérisé en ce qu'il est prévu une source de gaz sous pression (3) à laquelle les pompes à bulles de l'accumulateur (6) sont reliées par une canalisation d'alimentation en gaz (7), tandis qu'un accumulateur de gaz (8), disposé sur cette canalisation (7) d'alimentation en gaz, est susceptible d'être rempli pendant un court laps de temps jusqu'à une surpression prédéfinie, et est susceptible d'être déchargé brusquement par une soupape électromagnétique (9) vers les pompes à bulles.

3. Dispositif selon la revendication 2, caractérisé en ce que ce dispositif est intégré, en même temps qu'une horloge (4), dans un appareil électrique de mise en charge.